# EUROPÄISCHE PATENTSCHRIFT

(11) **EP 2 376 878 B1**
(45) Veröffentlichungstag und Bekanntmachung des Hinweises auf die Patenterteilung: **04.12.2019**
(21) Anmeldenummer: 09795921.7
(22) Anmeldetag: 16.12.2009
(51) Int. Cl.: G01G 21/23

(54) **STANDFUSS FÜR EINE WÄGEZELLE**
PEDESTAL FOR A LOAD CELL
PIED POUR UNE CELLULE DE PESÉE

(30) Priorität: 16.12.2008 DE 102008062249
(43) Veröffentlichungstag der Anmeldung: 19.10.2011
(73) Patentinhaber: Hottinger Baldwin Messtechnik GmbH, 64293 Darmstadt (DE)
(72) Erfinder: SCHLACHTER, Werner, 64380 Rossdorf (DE); HOST, Ursula, 64347 Griesheim (DE); SCHMIDT, Stefan, 66424 Einöd (DE)
(74) Vertreter: Staudte, Ralph
(86) Internationale Anmeldenummer: PCT/EP2009/009026
(87) Internationale Veröffentlichungsnummer: WO 2010/075970

(56) Entgegenhaltungen:
- DE-A1- 3 537 838
- DE-A1- 19 911 895
- DE-B- 1 139 289
- DE-C- 847 660
- US-A- 3 490 554

## Beschreibung

Die Erfindung betrifft einen Standfuss für eine Wägezelle nach dem Oberbegriff des Patentanspruchs 1.

Derartige Standfüsse werden insbesondere bei Plattformwagen verwendet. Zur kostengünstigen Herstellung derartiger Plattformwagen werden die Wägezellen beabstandet an den vier Ecken der Plattform direkt unter dieser befestigt. Andererseits stützen sich die Wägezellen über jeweils einen Standfuss auf dem Boden oder einer anderen Standfläche ab. Derartige Standfüsse können aber auch für Behälterwaagen oder zur Verwiegung anderer belastbarer Geräte eingesetzt werden. Dabei haben die Standfüsse die Aufgabe, die zu messende Gewichtskraft aufzunehmen und ohne messwertverfälschende Einflüsse in die Wägezelle einzuleiten. Denn insbesondere bei Plattformwaagen biegt sich die Plattform durch eine Gewichtsbelastung meist etwas durch und überträgt dadurch auf die Standfüsse eine horizontale Längskraft und ein Torsionsmoment, das zu einer Verschlechterung der Wägegenauigkeit führen kann. Der Standfuss muss deshalb die aus der Bewegung der Plattform entstehenden Spannungen abbauen und die Gewichtskraft möglicht unverändert in die Wägezellen einleiten. Es sind deshalb eine Vielzahl von Standfüssen und anderen Laststützen in unterschiedlichen Ausführungen bekannt, die das Gewicht eines Lastträgers oder einer Wägeplattform möglichst spannungsfrei in die Wägezellen einleiten sollen

So ist aus der DE 196 25 821 C1 ein Standfuss, insbesondere für eine Plattformwaage bekannt, der eine Gelenkstelle aufweist, über die die Gewichtskraft direkt in eine Wägezelle eingeleitet wird. Dabei besteht der Standfuss aus einem Lastbolzen, der über ein unteres Gelenk mit einer Bodenplatte verbunden ist. Der Lastbolzen besitzt an seinem oberen Teil einen Gewindeschaft, mit dem dieser höhenverstellbar in die Wägezelle einschraubbar ist. Am unteren Teil des Lastbolzens ist dieser mit einer balligen Abstützfläche zur Kraftausleitung in die Bodenplatte versehen. In der Bodenplatte ist eine Bohrung eingebracht, die eine planare Stirnfläche aufweist, auf der der Lastbolzen mit seiner balligen Abstützfläche gelenkig gelagert ist. Zur Abhebesicherung des gelenkig in der Bodenplatte angeordneten Lastbolzens ist sowohl in der Bodenplatte als auch am Lastbolzen eine Ringnut eingelassen. Dabei ist in der Ringnut am Lastbolzen ein Sprengring eingeklemmt, der gleichfalls in die gegenüberliegende Ringnut an der Bodenplatte eingreift und ein Abheben der Bodenplatte verhindert. Bei einer Gewichtsbelastung und damit verbundenen Durchbiegung der Plattform entsteht durch das abrollende Gelenk im Fuss zwar keine horizontale Längskraft, aber durch die horizontale Auslenkung des starren Krafteinleitungspunktes wird die Kraft nicht lotrecht in die Wägezellen eingeleitet, was zu einem Wägefehler insbesondere durch die relativ langen Lastbolzen führen kann.

Aus der DE 199 11 895 C2 ist ein Standfuss für eine Messzelle, insbesondere für eine Wägezelle bekannt, bei dem zwischen der Wägezelle und der Bodenplatte zwei Gelenke vorgesehen sind. Dazu sind die beiden Gelenke in einem oberen - und unteren Kraftübertragungsstück angeordnet. Das obere Kraftübertragungsstück besteht aus einem in der Wägezelle eingeschraubten Gewindeteil mit einer daran angesetzten zylinderförmigen Druckstückaufnahme, die eine vertikale Bohrung mit planarer Stirnfläche aufweist. Das untere Kraftübertragungsstück besteht ebenfalls aus einem in der Bodenplatte eingeschraubten Gewindeteil mit einer nach oben gerichteten zylindrischen Druckstückaufnahme, die ebenfalls eine vertikale Bohrung mit einer planaren Stirnfläche besitzt. In diesen sich gegenüberliegenden Druckstückaufnahmen ist ein relativ kurzer Kraftübertragungsbolzen als Druckstück angeordnet, der an seinen beiden Enden je eine gleichartige konkave oder ballige Druck- oder Kraftübertragungsfläche aufweist. Dadurch bildet der Kraftübertragungsbolzen in den beiden Bohrungen jeweils ein oberes und ein unteres Gelenk und wird dadurch gelenkig gelagert. Bei einer Belastung und Durchbiegung der Wägeplattform kommt es zwar nur in dem relativ kurzen Kraftübertragungsbolzen zu einer horizontalen Auslenkung, wodurch sich aber auch der Abstand zwischen dem Krafteinleitungspunkt und dem Kraftaufnahmepunkt gegenüber einer lotrechten Krafteinleitung vergrößert. Hierdurch verringert sich zwar der Messfehler, ist aber nicht vollständig vermeidbar.

Weiterer Stand der Technik ist aus den Druckschriften DE 11 39 289 B, DE 847 660 C, US 3 490 554 A und DE 35 37 838 A1 bekannt.

Der Erfindung liegt daher die Aufgabe zu Grunde, einen Standfuss der eingangs genannten Art so zu verbessern, dass dadurch die Messgenauigkeit der Waage erhöht wird.

Diese Aufgabe wird durch die im Patentanspruch 1 angegebene Erfindung gelöst. Weiterbildung und vorteilhafte Ausführungsbeispiele der Erfindung sind in den Unteransprüchen angegeben.

Die Erfindung hat den Vorteil, dass durch das obere Gelenk mit einer relativ kleinen Lagerkugel der Krafteinleitungspunkt sich auch bei einer Durchbiegung der Wägeplattform zum Kraftaufnahmepunkt nicht verändert, so dass dadurch eine hohe Wägegenauigkeit erzielbar ist. Dies wird noch dadurch unterstützt, dass durch die ballige Kraftaufnahmefläche innerhalb der Bodenplatte mit einem Radius der der Länge des Kraftübertragungsbolzens entspricht auch bei einer seitlichen Auslenkung die Gewichtskraft stets lotrecht in die Wägezelle eingeleitet wird, wodurch die Wägegenauigkeit zusätzlich verbessert wird.

Die Erfindung hat weiterhin den Vorteil, dass durch die Krafteinleitung im Beriech der neutralen Faser der Wägezelle auch bei einer Durchbiegung oder einer seitlichen Verlagerung der Wägeplattform keine Veränderung der Biegespannungen in der Wägezelle auftreten kann, die die Messgenauigkeit eines Wägevorgangs verschlechtern könnte. Dabei hat insbesondere die Verlagerung des Krafteinleitungspunktes in die Wägezelle den Vorteil, dass dadurch ein spannungsfreier gelenkiger Standfuss mit geringer Bauhöhe erreichbar ist, der auch für flache Wagenbauarten verwendbar ist.

Die Erfindung wird anhand eines Ausführungsbeispiels, das in der Zeichnung dargestellt ist, näher erläutert. Es zeigen:
- Fig. 1:: eine Schnittdarstellung eines Standfusses für Wägezellen, und
- Fig. 2:: einen Teil einer Plattformwaage mit montierter Wägezelle und daran montierten Standfuss.

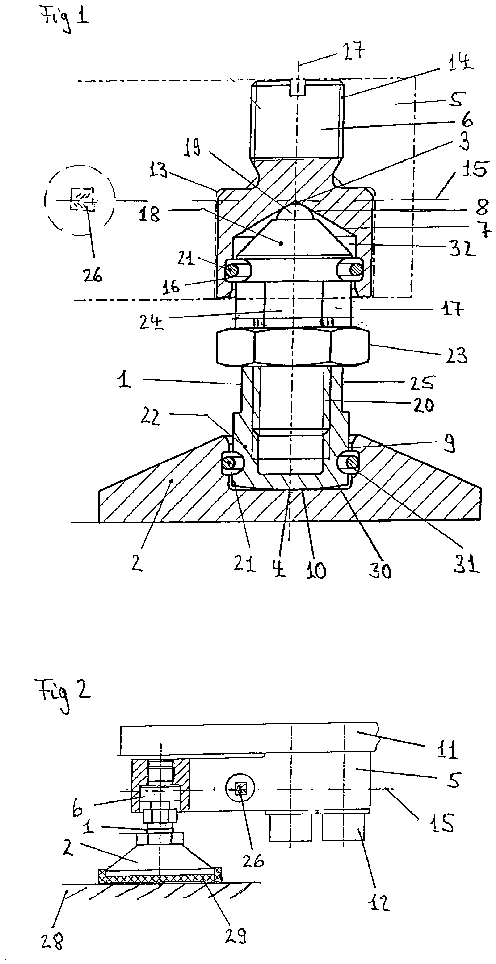

In Fig. 1 der Zeichnung ist ein Standfuss für eine Wägezelle 5 im Schnitt dargestellt, der aus einer in der Wägezelle 5 eingeschraubten Lagerhülse 6, einer Bodenplatte 2 und einem dazwischen angeordneten höhenverstellbaren Kraftübertragungsbolzen 1 besteht, wobei der Kraftübertragungsbolzen 1 mit seiner kugelförmigen Krafteinleitungsfläche 8 in der Lagerhülse 6 und mit seiner balligen Kraftaufnahmefläche 10 in der Bodenplatte 2 gelenkig gelagert ist.

Der Standfuss ist vorzugsweise für eine Plattformwaage vorgesehen, die ausschnittsweise in Fig. 2 der Zeichnung dargestellt ist. Diese besteht in der Regel aus einer rechteckförmigen Plattform 11 unter deren vier Eckbereichen jeweils eine Wägezelle 5 zur Ermittlung der Gewichtskraft von unten angeschraubt ist. Die Wägezelle 5 ist als Biegebalken ausgebildet, der horizontal unter der Plattform 11 angeordnet und mittels zweier Schrauben 12 an dieser befestigt ist. Gegenüberliegend zu diesen Befestigungsschrauben 12 enthält die Wägezelle 5 eine abgestufte Bohrung 13, in der der Standfuss eingeschraubt ist und auf den sich die Wägezelle 5 zur Standfläche 28 der Waage abstützt. Dabei sind derartige Standfüsse vorzugsweise für Plattformwaagen mit Nennlasten von 220 kg bis 4,4 t vorgesehen. Der in Fig. 1 und Fig. 2 dargestellte Standfuss ist dabei für eine Plattformwaage mit einer Nennlast von 2,2 t ausgeführt und besitzt eine einstellbare Höhe von 65 bis 72 mm bei einem Durchmesser der Bodenplatte 2 von ca. 50 mm.

Zur Verbindung des Standfusses mit der Wägezelle 5 wird dieser mittels der Lagerhülse 6 in der abgestuften Bohrung 13 verschraubt. Dazu ist die Lagerhülse 6 ebenfalls als abgestufter Bolzen ausgeführt, an dessen äußerer Mantelfläche mindestens im oberen Bereich ein Außengewinde 14 angeordnet ist, das in einem gleichartigen Innengewinde in der abgestuften Bohrung 13 der Wägezelle eingeschraubt ist. Im unteren Teil der Lagerhülse 6 ist eine vertikale Bohrung eingebracht, in der als Lagerpfanne 7 eine kegelförmige Abstützfläche ausgebildet ist. Die Kegelspitze ist dabei so in die Lagerhülse 6 eingebracht, dass diese in Höhe der neutralen Faser 15 der Wägezelle 5 endet. Die Lagerhülse 6 wird vorzugsweise aus einem gehärteten, verschleißfesten Edelstahl hergestellt, der sich auch bei Nennbelastung nur unwesentlich verformt. In die innere Mantelfläche der Lagerhülse 6 ist noch eine obere Ringnut 16 eingebracht, die ein Teil einer oberen Abhebesicherung darstellt.

Zur Kraftübertragung der Gewichtskraft ist zwischen der Wägezelle 5 und der kraftaufnehmenden Bodenplatte 2 in der Lagerhülse 6 ein vertikaler Kraftübertragungsbolzen 1 angeordnet, der in seiner axialen Länge verstellbar ausgeführt ist. Dazu ist der Kraftübertragungsbolzen 1 zweiteilig ausgebildet, wobei die beiden Teile über ein längsverschraubbares Gewinde miteinander verbunden sind. Der obere Teil 24 des Kraftübertragungsbolzens 1 besteht aus einem Sechskantrohr 17, einem Kugeladapter 18, einer Lagerkugel 19 und einem Gewindeschaft 20. Dabei liegt die Lagerkugel 19 mit ihrer kugelförmigen Krafteinleitungsfläche 8 an der kegelförmigen Lagerpfanne 7 an und bildet in Höhe der neutralen Faser 15 das obere Gelenk 3. Durch den kegelförmigen Kugeladapter 18 wird die gehärtete Lagerkugel 19 am Kraftübertragungsbolzen 1 fixiert. Unterhalb des Kugeladapters 18 ist zwischen diesem und dem Sechskantrohr 17 eine Ringnut eingelassen, in der ein Sprengring 21 zur oberen Abhebesicherung eingeklemmt ist. Dabei ist zwischen dem Sprengring 21 und der oberen Ringnut 16 als auch zwischen der inneren Mantelfläche und der Lagerhülse 6 und dem Aussendurchmesser des Kraftübertragungsbolzens 1 mindestens ein bis zwei Millimeter Spiel, um eine seitliche Auslenkung des oberen Gelenks 3 zu ermöglichen.

Der untere Teil 25 des Kraftübertragungsbolzens 1 besteht aus einem beidseitig abgeflachten Rundrohrteil 22 mit einem Aussen- und einem Innengewinde und einer am unteren Ende angeordneten balligen Kraftaufnahmefläche 10. Zur Höhenverstellung ist der Gewindeschaft 20 des oberen Teils 24 des Kraftübertragungsbolzens 1 in das Innengewinde des unteren Teils 25 eingeschraubt und kann durch Verdrehen beider Teile in seiner axialen Länge verstellt werden. Zur Fixierung der Einstellung ist noch eine Kontermutter 23 vorgesehen, die auf dem Aussengewinde des unteren Teils 25 des Kraftübertragungsbolzens 1 geführt ist. Der Kraftübertragungsbolzen 1 besitzt in der dargestellten Ausführung eine Länge von ca. 35 mm und ist ca. 6 mm in seiner axialen Länge verstellbar.

Zur Ausbildung des unteren Gelenks 4 ist in der runden Bodenplatte 2 eine zentrale Bohrung 9 eingebracht, deren Durchmesser ca. 1 bis 2 mm grösser ist als der Aussendurchmesser des unteren Teils 25 des Kraftübertragungsbolzens 1. Dabei ist die Stirnfläche der zentralen Bohrung 9 in der Bodenplatte 2 planar ausgebildet. Zur Kraftübertragung stützt sich der Kraftübertragungsbolzen 1 mit seiner balligen Kraftaufnahmefläche 10 auf der planaren Stirnfläche der Bodenplattenbohrung 9 ab und bildet mit dieser das untere Gelenk 4. An der inneren Mantelfläche der Bodenplattenbohrung 9 ist zur Abhebesicherung noch eine untere Ringnut eingebracht, in der ebenfalls ein Sprengring 21 in einer Ringnut 31 am unteren Teil 24 des Kraftübertragungsbolzens 1 mit einem Spiel von ca. ein bis zwei Millimetern eingreift.

Zur verformungsfreien Kraftübertragung sind die Teile des Standfusses vorzugsweise aus einem hochbelastbaren rostfreien Stahl hergestellt, wobei die Lagerkugel 19 vorzugsweise gehärtet ist. Zum Ausgleich einer unebenen Standfläche 28 ist die Bodenplatte 2 noch mit einem Gummiteller 29 verbunden, mit dem sich der Standfuss auf der Standfläche 28 abstützt.

Durch den vorbeschriebenen Standfuss wird die auf der Plattform 11 befindliche Gewichtsbelastung wie folgt auf die Standfläche 28 übertragen:
Bei einer Belastung der Plattform 11 mit einer Gewichtsbelastung wird über die Lagerhülse 9 des Standfusses eine Gegenkraft in die Wägezelle 5 eingeleitet. Diese wird dann über den Kraftübertragungsbolzen 1 mit Hilfe des oberen Gelenks 3 und des unteren Gelenks 4 in die Bodenplatte 2 ausgeleitet und durch deren Querschnittsfläche auf die Standfläche 28 übertragen. Bei einer Nennbelastung biegt sich der Balken der Wägezelle 5 ca. 0,05 bis 0,2 mm durch, so dass der vorzugsweise an einer vertikalen Membran angebrachte Dehnungsmessstreifen als Scherkraftaufnehmer 26 seinen elektrischen Widerstand proportional zur Krafteinleitung verändert. Dabei ist der Scherkraftaufnehmer 26 symmetrisch zur neutralen Faser 15 angeordnet, in der die Biegespannungen null sind, wodurch eine hohe Messgenauigkeit erzielbar ist.

Bei einer Plattformwaage biegt sich bei einer Gewichtsbelastung gleichzeitig auch die Plattform 11 geringfügig durch, so dass bei den Standfüssen nach dem vorgenannten Stand der Technik ein Kippmoment in die dortigen Krafteinleitungselemente übertragen wird, was zu Biegespannungen oder einer nicht lotrechten Kraftausleitung führen kann. Da bei dem erfindungsgemäßen Standfuss die Krafteinleitung in Höhe der neutralen Faser 15 erfolgt, an der keine Biegespannungen auftreten, entsteht dort keine seitliche Auslenkung, sondern lediglich eine leichte Kippbewegung, um das obere Gelenk 3. Diese Kippbewegung erfolgt aber genau in der Spitze der kegelförmigen Lagerpfanne 7 in der Lagerhülse 6, in der die vertikale Gewichtskraft über die Lagerkugel 19 mit einer Krafteinleitungsfläche 8 gelenkig gelagert ist. Dadurch wird gewährleistet, dass sich auch der Krafteinleitungspunkt nicht horizontal verschiebt, so dass die Gewichtskraft lotrecht in den Kraftübertragungsbolzen 1 übertragen wird. Dabei wird durch die Kegelfläche der Lagerhülse 6 erreicht, dass sich auch bei einem Kippvorgang der Krafteinleitungspunkt nicht horizontal verschiebt, wie es bei einer Abrollfläche mit großem Radius auf einer planaren Krafteinleitungsfläche erfolgen würde. Deshalb ist nur eine verhältnismäßig kleine kugelförmige Krafteinleitungsfläche 8 vorgesehen, bei der der Kugeldurchmesser so klein gewählt ist, dass dieser gerade noch die zulässige Nennbelastung ohne eine plastische Verformung übertragen kann. Dazu wird sowohl die Lagerkugel 19 als auch die Lagerhülse 6 aus einem hochfesten und gehärteten rostfreien Stahl gefertigt, wobei die Lagerkugel 19 bei einer Nennlast bis 4,4 t vorzugsweise einen Kugeldurchmesser von 4 bis 10 mm besitzt. Für derartige Standfüsse werden vorzugsweise Kraftübertragungsbolzen 1 mit Kraftübertragungslängen von ca. 40 bis 90 mm vorgesehen. Bezogen auf diese Länge, die gleichzeitig ca. den Radius der balligen Kraftaufnahmefläche 10 darstellt, sind die Radien der Krafteinleitungsfläche 8 ein Bruchteil, vorzugsweise ein Fünfzigstel bis ein Fünftel, und zwar in Abhängigkeit der übertragbaren Nennlast. Für derartige gelenkige Lagerungen sind nicht nur kegelförmige Ausbildungen der Lagerpfannen 7, sondern auch andere konkav gebogene Ausbildungen denkbar, deren Gelenkpunkt aber immer auf dem Schnittpunkt der neutralen Faser 15 und der Symmetrieachse 27 des Standfusses liegen muss.

Durch eine derartige Ausbildung des oberen Gelenkes 3 an der Krafteinleitungsfläche 8 wird sichergestellt, dass auch bei einer vertikalen Durchbiegung der Plattform 11 die Gewichtskraft lotrecht auf die Standfläche 28 übertragen wird. Dazu ist der Standfuss gleichzeitig auch höhenverstellbar ausgebildet, so dass die Plattformwaage auch bei nicht waagerechten Standflächen oder Untergründen waagerecht ausrichtbar ist. Dies kann durch eine gegeneinander gerichtete Verdrehung der beiden Teile 24, 25 des Kraftübertragungsbolzens 1 erfolgen. Hierzu wird das Sechskantrohr 17 und die abgeflachte Stelle des Rundrohrteils 22 mittels passender Maulschlüssel gegeneinander verdreht, bis die Plattform 11 waagerecht ausgerichtet ist. Zur Fixierung kann dann die Kontermutter 23 gegen das Sechskantrohr 17 verdreht und damit gekontert werden.

Zur spannungsfreien Kraftübertragung ist der Standfuss zusätzlich noch in der Bodenplatte 2 gelenkig gelagert. Dazu ist der Kraftübertragungsbolzen 1 auf seiner Kraftaufnahmefläche 10 ballig ausgebildet, damit sich auch bei einer möglichen seitliche Auslenkung des Kraftübertragungsbolzens 1 dieser gelenkig auf der planaren zentralen Bohrungsfläche 9 abrollen kann. Damit wird durch den Radius der balligen Kraftaufnahmefläche 10, die gleich der Länge des Kraftübertragungsbolzens 1 ist, sichergestellt, dass sich der Krafteinleitungspunkt stets lotrecht über dem Kraftaufnahmepunkt befindet. Da durch den Radius der balligen Kraftaufnahmefläche 10 gleichzeitig sichergestellt wird, dass der Abstand zwischen dem Krafteinleitungspunkt und dem Kraftaufnahmepunkt auch bei einer seitlichen Auslenkung stets unverändert bleibt, wird die Gewichtskraft stets lotrecht in die Wägezelle 5 eingeleitet. Deshalb wird durch den erfindungsgemäßen Standfuss eine messfehlerfreie Krafteinleitung in die Wägezelle 5 sichergestellt, auch wenn sich die Plattform 11 durch eine Gewichtsbelastung durchbiegt oder seitlich ausgelenkt wird.

## Patentansprüche

1. Standfuß für Wägezellen (5), der einen Kraftübertragungsbolzen (1) und eine Bodenplatte (2) enthält, wobei
der Kraftübertragungsbolzen (1) gelenkig über ein oberes Gelenk (3) mit der Wägezelle (5) und über ein unteres Gelenk (4) mit der Bodenplatte (2) verbunden ist,
das obere Gelenk (3) aus einer Lagerhülse (6) mit einer innenliegenden Lagerpfanne (7) besteht, in der der Kraftübertragungsbolzen (1) gelagert ist, und
das untere Gelenk (4) aus einer Bohrung (9) mit planarer Abstützfläche besteht, in die der Kraftübertragungsbolzen (1) mit seiner unteren balligen Kraftaufnahmefläche (10) gelagert ist,
**dadurch gekennzeichnet, dass**
die Lagerhülse (6) vollständig in die Wägezelle (5) eingelassen ist,
eine obere Krafteinleitungsfläche (8) des Kraftübertragungsbolzens (1) kugelförmig ausgebildet ist,
die Bohrung (9) des unteren Gelenks (4) in die Bodenplatte (2) eingelassen ist, und
der Radius der unteren balligen Kraftaufnahmefläche (10) etwa der Länge des Kraftübertragungsbolzens (1) entspricht, während der Radius der oberen kugelförmigen Krafteinleitungsfläche (8) einen Bruchteil und höchstens ein Fünftel des Radius der Kraftaufnahmefläche (10) beträgt.

2. Standfuß nach Anspruch 1, wobei
die Lagerhülse (6) innen eine vertikale zentrale Sackbohrung (32) enthält, deren Stirnfläche als kegelförmige innenliegende Lagerpfanne (7) ausgebildet ist.

3. Standfuß nach Anspruch 1 oder 2, wobei
der Kraftübertragungsbolzen (1) zweiteilig ausgebildet ist,
der obere Teil (24) des Kraftübertragungsbolzens (1) aus einer in einem Kugeladapter (18) fixierten Lagerkugel (19) besteht, und
der Kugeladapter (18) mit einem Sechskantrohr (17) verbunden ist, an dessen unterem Ende ein Gewindeschaft (20) mit Außengewinde angeordnet ist.

4. Standfuß nach Anspruch 3, wobei
der untere Teil (25) des Kraftübertragungsbolzens (1) aus einem Rundrohrteil (22) mit einer balligen Abstützfläche (30) als Kraftaufnahmefläche (10) besteht, und zur Aufnahme und Führung des Gewindeschafts (20) ein Innengewinde und zur Aufnahme und Führung einer Kontermutter (23) ein Außengewinde aufweist.

5. Standfuß nach Anspruch 4, wobei
sowohl am oberen Teil (24) als auch am unteren Teil (25) des Kraftübertragungsbolzens (1) als Abhebesicherung eine Ringnut mit Sprengring (21) angeordnet ist, und
der Sprengring (21) jeweils in eine mit Spiel behaftete obere und untere Ringnut (31) an der inneren Mantelfläche der Lagerhülse (6) und der Bohrung (9) in der Bodenplatte (2) eingreift.

6. Anordnung mit einem Standfuß nach einem der vorhergehenden Ansprüche und einer Wägezelle (5), wobei
der Standfuß in einer Bohrung (13) der Wägezelle (5) befestigt ist, und
sich der Krafteinleitungspunkt des Standfußes mit seiner oberen Krafteinleitungsfläche (8) auf der neutralen Faser (15) der Wägezelle (5) befindet.

## Claims

1. A pedestal for load cells (5), comprising a force transfer bolt (1) and a base plate (2), wherein
the force transfer bolt (1) is connected articulatedly to the load cell (5) by means of an upper joint (3) and to the base plate (2) by means of a lower joint (4),
the upper joint (3) consists of a bearing sleeve (6) which has an inner bearing cup (7) and in which the force transfer bolt (1) is seated, and
the lower joint (4) consists of a bore (9) which has a planar support surface and in which the force transfer bolt (1) with its lower convex force receiving surface (10) is seated,
**characterised in that**
the bearing sleeve (6) is fully embedded within the load cell (5),
an upper force input surface (8) of the force transfer bolt (1) is spherical in shape,
the bore (9) of the lower joint (4) is embedded within the base plate (2), and
the radius of the lower convex force receiving surface (10) is approximately equal to the length of the force transfer bolt (1), whereas the radius of the upper spherical force input surface (8) is a fraction of and at most one fifth of the radius of the force receiving surface (10).

2. The pedestal according to claim 1, wherein
the bearing sleeve (6) includes on its inside a vertical central blind hole (32), the end face of which is provided in the form of a conical inner bearing cup (7).

3. The pedestal of claim 1 or 2, wherein
the force transfer bolt (1) is in two parts,
the upper part (24) of the force transfer bolt (1) consists of a bearing ball (19) which is fixed in a ball adapter (18), and
the ball adapter (18) is connected to a hexagonal tube (17), at the bottom end of which a threaded shaft (20) with an external thread is arranged.

4. The pedestal according to claim 3, wherein
the lower part (25) of the force transfer bolt (1) consists of a round tube section (22) with a convex support surface (30) as a force receiving surface (10) and has an internal thread for receiving and guiding the threaded shaft (20) and an external thread for receiving and guiding a counter nut (23).

5. The pedestal according to claim 4, wherein
an annular groove with a snap ring (21) is arranged as a lift lock on both the upper part (24) and the lower part (25) of the force transfer bolt (1), and
each snap ring (21) engages respectively with some play in an upper and lower annular groove (31) on the inner surface of the bearing sleeve (6) and of the bore (9) in the base plate (2).

6. An assembly comprising a pedestal according to any one of the preceding claims and a load cell (5), wherein
the pedestal is secured in a bore (13) of the load cell (5), and
the force input point of the pedestal with its upper force input surface (8) is located on the neutral axis (15) of the load cell (5).

## Revendications

1. Pied pour cellules de pesée (5) comprenant un boulon de transmission de force (1) et une plaque de base (2), dans lequel
le boulon de transmission de force (1) est relié de manière articulée à la cellule de pesée (5) par l'intermédiaire d'une articulation supérieure (3) et à la plaque de base (2) par l'intermédiaire d'une articulation inférieure (4),
l'articulation supérieure (3) se compose d'un manchon de palier (6) ayant une cavité réceptrice intérieure (7) dans laquelle est logé le boulon de transmission de force (1), et
l'articulation inférieure (4) se compose d'un perçage (9) ayant une surface d'appui plane dans lequel est logé le boulon de transmission de force (1) avec sa surface de réception de force inférieure bombée (10),
**caractérisé en ce que**
le manchon de palier (6) est entièrement encastré dans la cellule de pesée (5),
une surface d'introduction de force supérieure (8) du boulon de transmission de force (1) est de forme sphérique,
le perçage (9) de l'articulation inférieure (4) est encastré dans la plaque de base (2), et
le rayon de la surface de réception de force inférieure bombée (10) correspond approximativement à la longueur du boulon de transmission de force (1), tandis que le rayon de la surface d'introduction de force supérieure (8) de forme sphérique est une fraction au plus égale à un cinquième du rayon de la surface de réception de force (10).

2. Pied selon la revendication 1, dans lequel
le manchon de palier (6) contient à l'intérieur un perçage borgne central vertical (32) dont la face frontale est conçue comme une cavité réceptrice intérieure (7) conique.

3. Pied selon la revendication 1 ou 2, dans lequel
le boulon de transmission de force (1) est formé en deux parties,
la partie supérieure (24) du boulon de transmission de force (1) se compose d'une bille de palier (19) fixée dans un adaptateur de bille (18), et
l'adaptateur de bille (18) est relié à un tube hexagonal (17) à l'extrémité inférieure duquel est disposée une tige filetée (20) à filetage extérieur.

4. Pied selon la revendication 3, dans lequel
la partie inférieure (25) du boulon de transmission de force (1) se compose d'une partie tubulaire arrondie (22) ayant une surface d'appui bombée (30) en tant que surface de réception de force (10) et comprenant un filetage intérieur pour la réception et le guidage de la tige filetée (20) et un filetage extérieur pour la réception et le guidage d'un contre-écrou (23).

5. Pied selon la revendication 4, dans lequel
une rainure annulaire dotée d'une bague de retenue (21) est disposée à la fois à la partie supérieure (24) et inférieure (25) du boulon de transmission de force (1) en tant que sécurité anti-soulèvement, et
la bague de retenue (21) s'engage respectivement dans une rainure annulaire inférieure et supérieure (31) affectée par du jeu au niveau de la surface d'enveloppe intérieure du manchon de palier (6) et au niveau de la surface d'enveloppe intérieure du perçage (9) dans la plaque de base (2).

6. Ensemble comprenant un pied selon l'une des revendications précédentes et une cellule de pesée (5), dans lequel
le pied est fixé dans un perçage (13) de la cellule de pesée (5), et
le point d'introduction de force du pied avec sa surface d'introduction de force supérieure (8) se trouve sur la fibre neutre (15) de la cellule de pesée (5).
